# EUROPÄISCHE PATENTSCHRIFT

(11) **EP 1 924 471 B1**
(45) Veröffentlichungstag und Bekanntmachung des Hinweises auf die Patenterteilung: **21.10.2009**
(21) Anmeldenummer: 07802473.4
(22) Anmeldetag: 02.08.2007
(51) Int. Cl.: B60S 3/06

(54) **WASCHPORTAL FÜR EINE FAHRZEUGWASCHANLAGE**
ROLLOVER WASH UNIT FOR A VEHICLE WASH SYSTEM
PORTIQUE DE LAVAGE POUR INSTALLATION DE LAVAGE DE VÉHICULES

(30) Priorität: 11.09.2006 DE 102006043221
(43) Veröffentlichungstag der Anmeldung: 28.05.2008
(73) Patentinhaber: WashTec Holding GmbH, 86153 Augsburg (DE)
(72) Erfinder: WIMMER, Georg, 86444 Affing (DE); HIRSCHMANN, Rüdiger, 86157 Augsburg (DE); KÖNIG, Norbert, 86167 Augsburg (DE)
(74) Vertreter: Gehrsitz, Stefan
(86) Internationale Anmeldenummer: PCT/EP2007/058013
(87) Internationale Veröffentlichungsnummer: WO 2008/031675

(56) Entgegenhaltungen:
- AU-A- 1 865 970
- DE-A1- 1 924 322
- JP-A- 60 047 746
- US-A- 5 713 092

## Beschreibung

Die Erfindung betrifft ein Waschportal für eine Fahrzeugwaschanlage nach dem Oberbegriff des Anspruchs 1.

Bei bekannten Waschportalen werden zwischen Seitenteilen gelagerten und drehbar antreibbaren Horizontal-Waschbürsten üblicherweise in sogenannten Laufwagen gelagert. Die Laufwagen sind in vertikal an den Innenseiten der Seitenteile angeordneten Führungsschienen verfahrbar. Üblicherweise haben die Laufwagen einen längsförmigen Laufwagenkörper, die an beiden Enden Rollen zur Führung des Laufwagens in den Führungsschienen aufweisen. Zwischen den Rollen sind üblicherweise die Lager für die horizontale Waschbürste vorgesehen. Hierdurch wird eine sehr stabile Lagerung der sich im Betrieb der Fahrzeugwaschanlage sehr schnell drehenden horizontalen Waschbürste sicher gestellt, da die durch die Rotation der Waschbürste erzeugten Momente gleichermaßen über die obere und untere Rolle des Laufwagens von der Führungsschiene aufgenommen werden können.

Nachteilig bei den bekannten Waschportalen ist jedoch, dass durch die mittige Lagerung der Waschbürste an den Laufwagen die Länge der Führungsschiene nach oben nicht voll ausgenutzt werden kann und hierdurch die maximale Waschhöhe begrenzt wird. Damit einher geht für die Hersteller von Fahrzeugwaschanlagen der große Nachteil, dass für unterschiedliche gewünschte maximale Waschhöhen unterschiedlich hohe Seitenteile benötigt werden. Um das Waschportal an die von dem Fahrzeugwaschanlagenbetreiber gewünschte Waschhöhe anzupassen, werden deshalb die Seitenteile oft zweiteilig mit Seitenrahmen und Fahrfuß ausgeführt wobei dann entweder durch den Fahrfuß oder den Seitenrahmen die entsprechende Höhenanpassung vorgenommen wird. Dies ist fertigungstechnisch aufwendig, da für unterschiedliche maximale Waschhöhen jeweils unterschiedlich hohe Fahrfüße oder Seitenteile konstruiert und bevorratet werden müssen. Um diese Nachteile etwas abzumildern, werden aktuell Waschportale für bestimmte Höhenraster der maximalen Waschhöhe angeboten, wodurch aber nicht jeder Fahrzeugwaschanlagenbetreiber optimal bedient werden kann. Dies ist vor allem für in Waschhallen angeordnete Fahrzeugwaschanlagen nachteilig, da insbesondere bei niedrigen Hallen eine Ausnutzung der maximalen Raumhöhe für die Waschhöhe unabhängig von vorgegebenen Höhenrastern gewünscht ist. Treten Fehler bei der Vormontage des Waschportals beim Hersteller auf und werden diese erst beim Aufstellen des Waschportals beim Fahrzeugwaschanlagenbetreiber festgestellt, müssen die entsprechenden falschen Seitenteile oder Fahrfüße erst demontiert und durch nachträglich zu liefernde Teile ersetzt werden, was zeitaufwendig und kostenintensiv ist.

Ein Beispiel eines derartigen Waschportals offenbart die DE 35 40 598 C2 in Form einer Trocknungsvorrichtung für die Trocknung von Kraftfahrzeugen in Fahrzeugwaschanlagen, insbesondere Portalwaschanlagen. Dort ist an einem portalartigen Gestell aus Seitenteilen und einer Traverse ein horizontaler, sich in der Gestellebene erstreckender Gebläsekasten und mindestens ein an den Kasten angeschlossenes Gebläse vorgesehen. Eine Schlitzdüse mit nach unten gerichteter Austrittsöffnung ist unmittelbar an der Unterseite des Gebläsekastens angeordnet und der Gebläsekasten ist zusammen mit der Schlitzdüse und dem Gebläse als Einheit höhenbeweglich am Gestell gelagert. Die horizontale Traverse des Gestells ist kastenartig und hohl ausgebildet und weist an ihrer Unterseite eine Öffnung auf, wobei der Hohlraum und die Öffnung der Traverse so bemessen sind, dass der Gebläsekasten vollständig in die Traverse eingefahren werden kann. Hierdurch ist die maximale Waschhöhe des Waschportals abhängig von der Höhe der fest an den Seitenteilen montierten Traverse, so dass eine Anpassung der gewünschten Waschhöhe nur durch unterschiedlich hoch montierte Traversen möglich ist. Eine Anpassung des Waschportals an unterschiedlich hohe Waschhallen ohne Bauhöhenanpassung nur durch Ansteuerung der Behandlungseinrichtung ist dort nicht möglich.

AU-A-18 659 offenbart ein Waschportal gemäß dem ersten Teil des Anspruchs eins.

Aufgabe der vorliegenden Erfindung ist es deshalb, ein Waschportal für eine Fahrzeugwaschanlage bereitzustellen, welches die oben genannten Nachteile überwindet und eine effiziente, montagefreundliche und bedarfsgerechte Anpassung der Waschhöhe ermöglicht.

Diese Aufgabe wird durch ein Waschportal für eine Fahrzeugwaschanlage mit den Merkmalen des Anspruchs 1 gelöst. Vorteilhafte Ausgestaltungen und zweckmäßige Weiterbildungen der Erfindung sind in den Unteransprüchen angegeben.

Das eingangs genannte Waschportal zeichnet sich dadurch aus, dass die Führungselemente so ausgebildet sind, dass die Lager in einer Endposition der Führungselemente in den Führungen über die Führungen hinausragen und die Behandlungseinrichtung in der Endposition der Führungselemente über die Seitenteile und/oder eine Oberkante einer die Seitenteile verbindenden Traverse nach oben hinausragt.

Hierdurch wird es möglich, unterschiedliche maximale Waschhöhen durch ein einheitliches Waschportal mit einheitlicher Bauhöhe abzudecken. Bestehen sehr große Unterschiede in den abzudeckenden gewünschten maximalen Waschhöhen, reicht es aus, ein Waschportal in einer ersten Bauhöhe für die niedrigste gewünschte maximale Waschhöhe und in einer zweiten Bauhöhe für die höchste gewünschte maximale Waschhöhe bereit zu stellen, währen die dazwischen liegenden gewünschten maximalen Waschhöhen durch eine der beiden Ausführungen abgedeckt werden.

In einer vorteilhaften Ausführung der Erfindung sind die Führungselemente in Form von Laufwagen ausgebildet, die eine vertikal nach oben weisende Kröpfung zur Lagerung der Behandlungseinrichtung aufweisen. Hierdurch kann fertigungstechnisch besonders einfach eine Anpassung an die gewünschte maximale Waschhöhe bereitgestellt werden. Diese wird lediglich dadurch begrenzt, dass in der niedrigsten möglichen Position des Führungselements bzw. Laufwagens in der Führungsschiene noch die Frontpartie des zu waschenden Fahrzeugs von der Waschbürste gewaschen werden können muss. In einer weiteren vorteilhaften Ausführung der Erfindung weisen die Führungselemente vertikal nach oben verschiebbare Teleskopteile auf, an denen die Behandlungseinrichtung gelagert wird. Hierdurch kann eine besonders genaue Anpassung an die gewünschte maximale Waschhöhe vorgesehen werden, wobei diese dann in bestimmten Umfang auch noch nachträglich verändert werden kann.

In weiteren Ausgestaltungen der Erfindung weist die Behandlungseinrichtung eine drehbar und horizontal gelagerte Waschbürste, Trocknungsdüsen und/oder Düsenanordnungen auf. Zudem kann die Behandlungseinrichtung auch noch weitere sicherheitstechnische oder spritzschutztechnische Elemente enthalten.

Weitere Besonderheiten und Vorzüge der Erfindung ergeben sich aus der folgenden Beschreibung eines bevorzugten Ausführungsbeispiels anhand der Zeichnungen. Es zeigen:
- **Fig. 1**: eine schematische Vorderansicht und einen Detail eines erfindungsgemäßen Waschportals;
- **Fig. 2**: eine Seitenansicht des Waschportals aus Fig.1 von links mit einer horizontalen Waschbürste in einer ersten Stellung für eine niedrige Waschhöhe;
- **Fig. 3**: eine Seitenansicht des Waschportals aus Fig.1 von links mit einer horizontalen Waschbürste in einer zweiten Stellung für eine mittlere Waschhöhe;
- **Fig. 4**: eine Seitenansicht des Waschportals aus Fig.1 von links mit einer horizontalen Waschbürste in einer vierten Stellung für eine maximale Waschhöhe.

Die Zeichnungen zeigen ein verfahrbares Waschportal 1, wie es in Fahrzeug-Portalwaschanlagen eingesetzt wird. Das Waschportal 1 kann hierzu in Längs- bzw. Waschrichtung L gegenüber dem während des Waschvorgangs ruhenden Fahrzeug bewegt werden. Die Erfindung kann aber gleichermaßen bei ortsfest montierten Waschportalen in Durchfahrts-Waschanlagen eingesetzt werden, in denen die Fahrzeuge an einem, üblicherweise an mehreren Waschportalen mit unterschiedlichen daran angeordneten Behandlungseinrichtungen vorbei fahren oder vorbei transportiert werden.

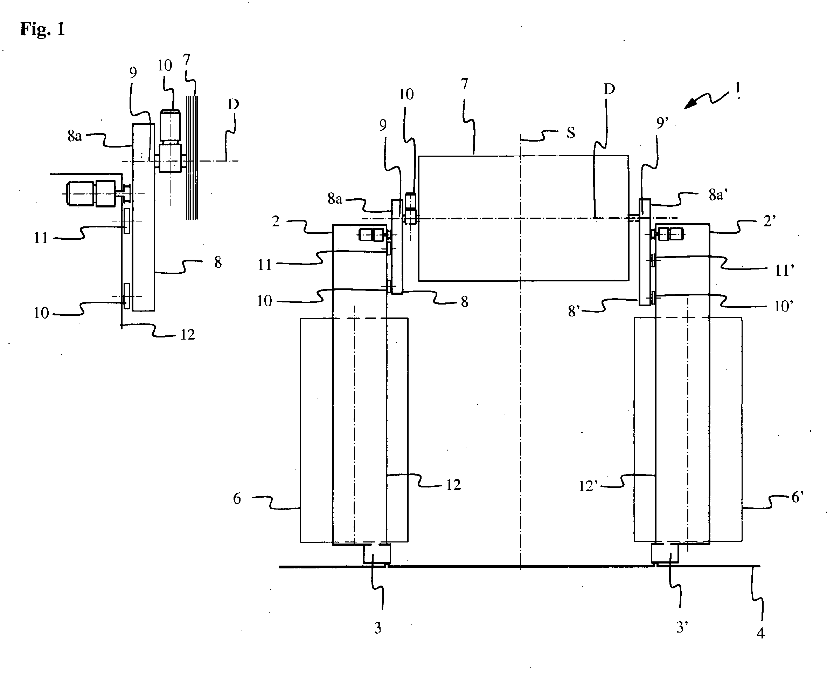

Da das Waschportal 1 im Wesentlichen zu der in Fig. 1 mit dargestellten Symmetrielinie S bzw. -Ebene symmetrisch ausgebildet ist, wird zur Vermeidung von Wiederholungen nachfolgend vor allem die in Fig. 1 linke Seite des Waschportals 1 beschrieben und auf die Beschreibung der entsprechenden rechten Seite verzichtet, sofern es zur Erläuterung der Erfindung sinnvoll ist. Die entsprechenden Aussagen sind jedoch auf die rechte Seite übertragbar. Die entsprechenden rechtsseitigen Teile und Elemente werden mit gleichen Bezugszeichen wie die linksseitigen zuzüglich eines Apostroph's bezeichnet.

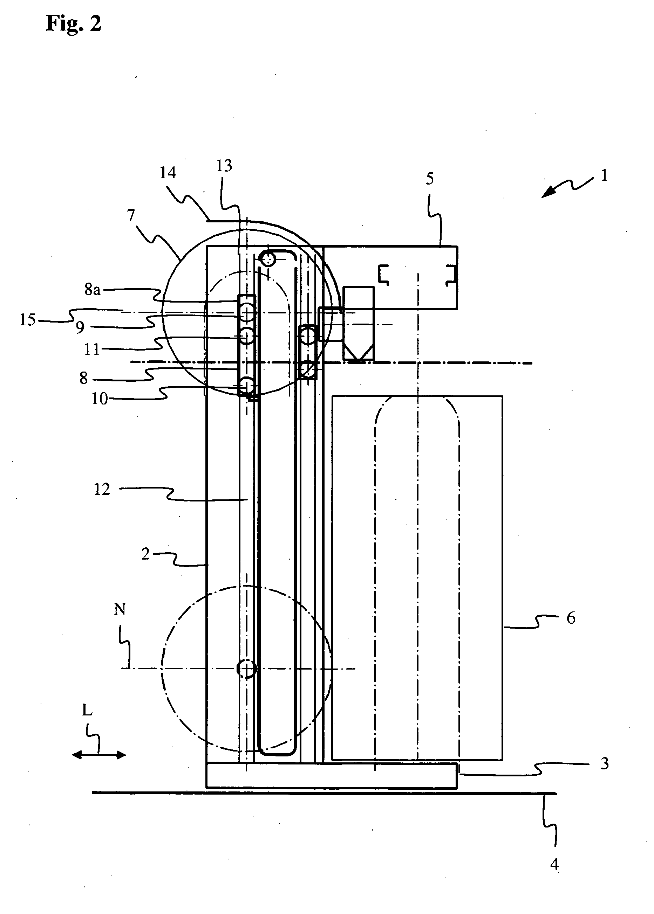

Das Waschportal 1 weist in an sich bekannter Weise Seitenteile 2, 2' auf. Die Seitenelemente 2, 2' haben Fahrfüße 3, 3', die über Rollen auf einer aus zwei zueinander parallelen Schienen bestehenden, am Hallenboden 4 angeordneten Schienenanordnung verfahrbar gelagert sind. Die Seitenteile 2, 2' sind über eine in den Fig. 2 bis 4 dargestellte Traverse 5 miteinander verbunden. Zwischen den Fahrfüßen 3, 3' und der Traverse 5 sind für die Reinigung der Seitenflächen eines zu waschenden Fahrzeugs rotierend antreibbare Vertikal-Waschbürsten 6 angeordnet, die je nach gewünschter maximaler Waschhöhe in den Fig. 2 bis 4 unterschiedlich hoch sind.

Die Reinigung der im wesentlichen waagrechten Fahrzeugoberflächen sowie der weitgehend senkrechten, senkrecht zur Längsrichtung L verlaufenden Fahrzeugoberflächen, also beispielsweise Kühlergrill und Fahrzeugheck, erfolgt über eine horizontal zwischen den Seitenelementen 2, 2' angeordnete Horizontal-Waschbürste 7. Die Horizontal-Waschbürste 7, die im Weiteren nur als Waschbürste 7 bezeichnet wird, stellt eine Behandlungseinrichtung im Sinne der Erfindung dar. An Stelle der Waschbürste 7 kann die Behandlungseinrichtung aber auch durch eine Düsenanordnung, wie sie beispielsweise bei Hochdruckreinigungsanlagen verwendet wird, oder durch eine Trocknungsvorrichtung gebildet werden.

Die Waschbürste 7 ist mittels Lager 9, 9' an einem Laufwagen 8, 8' um eine Drehachse D drehbar gelagert. Angetrieben wird die Waschbürste 7 durch einen zwischen Laufwagen 8 und Waschbürste 7 angeordneten Antrieb, hier einen Elektromotor 10. Anstatt eines Elektromotors können aber auch alternative Antriebe verwendet werden, beispielsweise Riemen- oder Hydraulikantriebe.

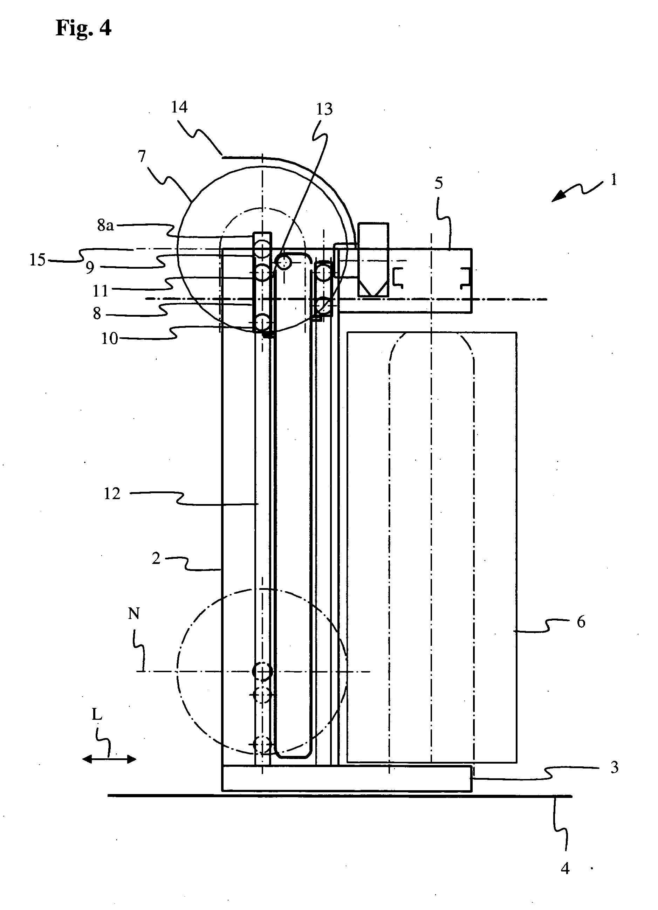

Das Lager 9 ist hierbei in dem in Fig. 1 obersten Bereich des Laufwagen 8 angeordnet. Weiter weist der Laufwagen 8 an seinem unteren Ende und in seiner Mitte Rollen 10, 11 auf, die in eine an dem Seitenteil 2 angeordnete Führungsschiene 12 eingreifen. Die Führungsschiene 12 endet an einem oberen Ende 13, bis zu welchem das obere Laufrad 11 des Laufwagens 8 verfahren werden kann. Diese Endposition des Laufwagens 8 in der Führungsschiene 12 ist in Fig. 4 dargestellt. Wie aus Fig. 4 weiterhin hervorgeht, ragt das obere Ende des Laufwagens 8 mit dem Lager 9 der Waschbürste 7 über das obere Ende 13 der Führungsschiene 12 hinaus, wobei die Waschbürste 7 weit über die Oberkante der Traverse 5 hinausragt. Die in Fig. 4 gezeigte Waschhöhe stellt also bei dem in den Zeichnungen gezeigten Waschportal 1 die für diese Bauhöhe mögliche maximale Waschhöhe dar. Ist der Aufstellort der Fahrzeugwaschanlage niedriger als der in Fig. 4 und deshalb eine niedrigere maximale Waschhöhe gewünscht, wie in Fig. 2 gezeigt, so kann trotzdem das Waschportal 1 gleicher Bauhöhe aus Fig. 4 verwendet werden, ohne besondere bauliche Änderungen am Waschportal 1 vornehmen zu müssen.

Um die Waschbürste 7 vor einer Berührung mit der Waschhallendecke zu schützen und ein Verspritzen von Waschwasser durch die Waschbürste 7 an die Waschhallendecke und über das Waschportal 1 hinaus zu verhindern, ist am Waschportal 1 eine Schutzabdeckung 14 vorgesehen.

In den Fig. 2 bis 4 ist die Waschbürste 7 mit durchgezogenen Linien jeweils in einer oberen Position dargestellt. Die mit strichpunktierten Linien dargestellte Waschbürste 7 deutet die niedrigste Position N der Waschbürste 7 an, in der die Waschbürste 7 die untersten Bereiche der senkrecht stehenden Fahrzeugfront- und Heckflächen eines zu waschenden Fahrzeugs noch reinigen kann. Die niedrigste Position N ist bei Verwendung einer Laufwagengröße für alle Bauhöhen gleich. Die strichpunktierte Linie 15 hingegen kennzeichnet die Höhe der Drehachse D der Waschbürste 7, die über den Durchmesser der Waschbürste 7 auch als Maß für die gewünschten maximale Waschhöhe dienen kann.

Die Fig. 2 bis 4 zeigen, wie mittels eines Waschportals 1 einer Bauhöhe die Wünsche nach unterschiedlichen maximalen Waschhöhen verwirklicht werden können. Der Laufwagen 8 kann in jedem Fall in die niedrigste Position N fahren, um die senkrechten und quer zur Längsrichtung verlaufenden Oberflächen eines zu waschenden Fahrzeugs waschen zu können.

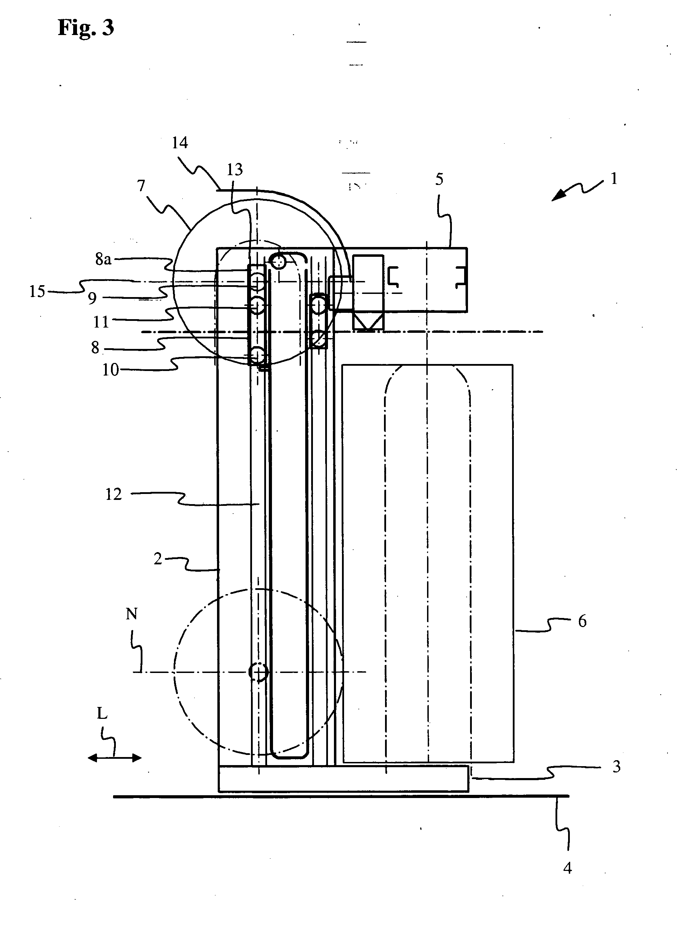

Die Drehachse D der Waschbürste verläuft in den Fig. 2 und 3 gezeigten Stellungen für niedrige und mittlere gewünschte maximale Waschhöhe noch im Bereich der Laufschienen 12.

Ist eine höhere maximale Waschhöhe gewünscht, so kann der Laufwagen 8 aber noch weiter nach oben verfahren werden, wobei die Drehachse D dann über das obere Ende 13 der Führungsschiene 12 hinausragt. In Fig. 4 ist der Laufwagen 8 in seiner oberen Endposition in der Führungsschiene 12 gezeigt, die Lager 9 ragen dann maximal über die Führungsschiene 12 hinaus. Diese Endposition begrenzt dann die für das Waschportal 1 dieser Bauhöhe maximale Waschhöhe.

Bei einer herkömmlichen Anbringung der Waschbürste 7 am Laufwagen 8 über zwischen den Rollen 10, 11 angeordneten Lagern 9, 9' und Drehachse D könnte die Waschbürste 7 in der in Fig. 4 gezeigten Stellung des Laufwagens 8 lediglich bis zu einer Waschhöhe hochfahren, die zwischen der der Fig. 2 und 3 liegt.

Das erfindungsgemäße Waschportal 1 ermöglicht es, Wünschen nach unterschiedlichen maximalen Waschhöhen mit einer einzigen Bauhöhe des Waschportals 1 zu ermöglichen. Bei der Montage des Waschportals 1 vor Ort müssen deshalb lediglich die entsprechenden Vertikal-Waschbürsten 6 in passender Höhe angeordnet werden, eine Anpassung der gewünschten maximalen Waschhöhe über unterschiedliche Fahrfüße 3 oder Seitenteile 2 ist nicht notwendig. Eine Anpassung an sehr unterschiedlich große maximale Waschhöhen kann auch durch die Verwendung von Laufwagen 8, 8' unterschiedlicher Länge erfolgen.

In einer zeichnerisch nicht dargestellten Ausführung der Erfindung werden die Überstände der Laufwagen 8, 8' durch Kröpfungselemente verwirklicht. Die Laufwagen sind dann kürzer, wobei die oberen Rollen dann am oberen Ende der Laufwagen angeordnet sind. Die Kröpfungselement sind mit ihrem einen Ende zwischen den Rollen angeordnet, während ihr anderes Ende in der Endposition der Laufwagen in den Führungsschienen, die die Führungen bilden, über diese hinausragt.

## Patentansprüche

1. Waschportal (1) für eine Fahrzeugwaschanlage, mit voneinander beabstandeten, mit Führungen (12, 12') versehenen Seitenteilen (2, 2' ) und einer Behandlungseinrichtung (7), die mittels Lager (9, 9') an in den Führungen (12, 12') verfahrbaren Führungselementen (8, 8') gelagert ist, **dadurch gekennzeichnet, dass** die Führungselemente (8, 8') so ausgebildet sind, dass die Lager (9, 9') in einer Endposition (Fig. 4) der Führungselemente (8, 8') in den Führungen (12, 12') über die Führungen (12, 12') hinausragen und die Behandlungseinrichtung (7) in der Endposition (Fig. 4) der Führungselemente (8, 8') über die Seitenteile (2, 2') und/oder eine Oberkante einer die Seitenteile (2, 2') verbindenden Traverse (5) nach oben hinausragt.

2. Waschportal (1) nach Anspruch 1, **dadurch gekennzeichnet, dass** die Führungselemente (8, 8') in den Führungen (12, 12') in vertikaler Richtung verfahrbar sind.

3. Waschportal (1) nach einem der vorhergehenden Ansprüche, **dadurch gekennzeichnet, dass** die Führungselemente in Form von Laufwagen (8, 8') mit vertikal nach oben weisenden Überständen (8a, 8a') zur Lagerung der Behandlungseinrichtung (7) ausgebildet sind.

4. Waschportal (1) nach einem der vorhergehenden Ansprüche, **dadurch gekennzeichnet, dass** die Führungselemente (8, 8') ein vertikal nach oben verschiebbares Teleskopteil zur Lagerung der Behandlungseinrichtung (7) aufweisen.

5. Waschportal (1) nach einem der vorhergehenden Ansprüche, **dadurch gekennzeichnet, dass** die Behandlungseinrichtung (7) Trocknungsvorrichtung aufweist.

6. Waschportal (1) nach einem der vorhergehenden Ansprüche, **dadurch gekennzeichnet, dass** die Behandlungseinrichtung (7) eine Düsenanordnung aufweist.

7. Waschportal (1) nach einem der vorhergehenden Ansprüche, **dadurch gekennzeichnet, dass** die Behandlungseinrichtung eine drehbar und horizontal gelagerte Waschbürste (7) aufweist.

8. Waschportal (1) nach Anspruch 7, **dadurch gekennzeichnet, dass** der Waschbürste (7) ein eigener Antrieb (10) zugeordnet ist.

## Claims

1. Washing portal (1) for a vehicle washing installation, with side parts (2, 2') which are spaced apart and provided with guides (12, 12'), and a treatment device (7) which is mounted by means of bearings (9, 9') on guide elements (8, 8') displaceable in the guides (12, 12'), **characterised in that** the guide elements (8, 8') are embodied so that in an end position (fig. 4) of the guide elements (8, 8') in the guides (12, 12') the bearings (9, 9') project beyond the guides (12, 12') and in the end position (fig. 4) of the guide elements (8, 8') the treatment device (7) projects upwardly beyond the side parts (2, 2') and/or an upper edge of a crossmember (5) connecting the side parts (2, 2').

2. Washing portal (1) according to claim 1, **characterised in that** the guide elements (8, 8') are displaceable in the guides (12, 12') in the vertical direction.

3. Washing portal (1) according to one of the preceding claims, **characterised in that** the guide elements are embodied in the form of trucks (8, 8') with projecting parts (8a, 8a') pointing vertically upwards for mounting the treatment device (7).

4. Washing portal (1) according to one of the preceding claims, **characterised in that** the guide elements (8, 8') exhibit a telescopic part displaceable vertically upwards for mounting the treatment device (7).

5. Washing portal (1) according to one of the preceding claims, **characterised in that** the treatment device (7) exhibits a drying device.

6. Washing portal (1) according to one of the preceding claims, **characterised in that** the treatment device (7) exhibits a nozzle arrangement.

7. Washing portal (1) according to one of the preceding claims, **characterised in that** the treatment device exhibits a washing brush (7) which is mounted rotatably and horizontally.

8. Washing portal (1) according to claim 7, **characterised in that** the washing brush (7) has its own drive (10).

## Revendications

1. Portique de lavage (1) pour une installation de lavage de véhicules avec des éléments latéraux (2, 2') pourvus de guidages (12, 12'), espacés les uns des autres et un dispositif de traitement (7) qui est logé au moyen de paliers (9, 9') sur des éléments de guidage (8, 8') mobiles dans les guidages (12, 12'), **caractérisé en ce que** les éléments de guidage (8, 8') sont réalisés de sorte que les paliers (9, 9') dépassent dans une position finale (figure 4) des éléments de guidage (8, 8') dans les guidages (12, 12') au-delà des guidages (12, 12') et le dispositif de traitement (7) dépasse vers le haut dans la position finale (figure 4) des éléments de guidage (8, 8') au-delà des éléments latéraux (2, 2') et/ou une arête supérieure d'une traverse (5) reliant les éléments latéraux (2, 2').

2. Portique de lavage (1) selon la revendication 1, **caractérisé en ce que** les éléments de guidage (8, 8') sont mobiles dans les guidages (12, 12') dans le sens vertical.

3. Portique de lavage (1) selon l'une quelconque des revendications précédentes, **caractérisé en ce que** les éléments de guidage sont réalisés sous la forme de chariots (8, 8') avec des saillies (8a, 8a') dirigées verticalement vers le haut pour le logement du dispositif de traitement (7).

4. Portique de lavage (1) selon l'une quelconque des revendications précédentes, **caractérisé en ce que** les éléments de guidage (8, 8') présentent un élément télescopique coulissant verticalement vers le haut pour le logement du dispositif de traitement (7).

5. Portique de lavage (1) selon l'une quelconque des revendications précédentes, **caractérisé en ce que** le dispositif de traitement (7) présente un dispositif de séchage.

6. Portique de lavage (1) selon l'une quelconque des revendications précédentes, **caractérisé en ce que** le dispositif de traitement présente un ensemble de buses.

7. Portique de lavage (1) selon l'une quelconque des revendications précédentes, **caractérisé en ce que** le dispositif de traitement présente un balai de lavage (7) logé à rotation et horizontalement.

8. Portique de lavage (1) selon la revendication 7, **caractérisé en ce qu'**au balai de lavage (7) est associé un propre entraînement (10).
